# FASCICULE DE BREVET EUROPEEN

(11) **EP 1 320 646 B1**
(45) Date de publication et mention de la délivrance du brevet: **24.06.2009**
(21) Numéro de dépôt: 01974389.7
(22) Date de dépôt: 20.09.2001
(51) Int. Cl.: E02D 13/02, F16F 3/02

(54) **DISPOSITIF DE DEPLACEMENT D'UNE CHARGE**
VORRICHTUNG ZUM VERSETZEN EINER LAST
DEVICE FOR DISPLACING A LOAD

(30) Priorité: 25.09.2000 FR 0012156
(43) Date de publication de la demande: 25.06.2003
(73) Titulaire: Salesse, Christian, 07100 Annonay (FR); Loriot, Jean-Marc, F-75015 Paris (FR)
(72) Inventeur: Salesse, Christian, 07100 Annonay (FR); Loriot, Jean-Marc, F-75015 Paris (FR)
(74) Mandataire: Bezault, Jean
(86) Numéro de dépôt international: PCT/FR2001/002930
(87) Numéro de publication internationale: WO 2002/025018

(56) Documents cités:
- WO-A-99/58810
- US-A- 3 828 864
- US-A- 4 813 498
- US-A- 4 901 591

## Description

L'invention concerne un dispositif de déplacement d'une charge, du type comprenant un support mobile propre à supporter la charge et à exercer sur cette charge une force dans une direction donnée.

Elle concerne plus particulièrement un tel dispositif de déplacement propre à autoriser des mouvements de faible amplitude de la charge, parallèlement à la direction de la force, et cela sans nécessiter d'efforts importants et sans provoquer de réactions importantes sur le support mobile.

Ce support mobile est généralement un appareil de manutention du type grue ou analogue apte à déplacer la charge suivant une direction verticale, dans le sens ascendant ou descendant.

Dans une application préférentielle de l'invention, le dispositif est destiné à déplacer une charge accrochée au support mobile et susceptible d'avoir des mouvements verticaux de faible amplitude.

Un tel dispositif de déplacement peut avoir notamment deux applications principales. L'une d'elles concerne la mise en position de pieux, encore appelés palplanches, susceptibles d'être enfoncés dans le sol. L'autre de ces applications concerne l'enfoncement ou l'extraction de pieux dans le sol par l'intermédiaire d'un générateur de vibrations.

Dans la première application, il s'agit de mettre en place des palplanches, lesquelles sont des pièces métalliques longues, en forme de profilés, dont le poids est généralement compris entre quelques centaines de kilogrammes et quelques tonnes. Ces pièces sont enfoncées dans le sol en étant liées les unes aux autres pour éviter l'écoulement d'eau dans une zone donnée, en général pour y effectuer des travaux.

Ces palplanches sont mises en position à l'aide d'un appareil de manutention, du type grue, qui doit déplacer la palplanche dans une position précise pour permettre l'insertion d'une encoche de la palplanche dans une encoche homologue d'une palplanche précédemment mise en place.

Il s'agit, en d'autres termes, de réaliser un "positionnement fin" de cette palplanche pour qu'elle puisse coopérer avec une palplanche précédente.

Jusqu'à présent, il n'existe sur le marché aucun moyen susceptible de permettre un tel positionnement fin et aucune solution n'a été proposée pour résoudre ce problème.

On sait en effet que les dispositifs de manutention actuels, tels que les grues et les ponts roulants, ne permettent pas de réaliser un positionnement précis ou fin d'une charge.

Dans la deuxième application précitée, les appareils de manutention sont équipés d'un générateur de vibrations pour enfoncer un pieu dans le sol en le poussant, soit au contraire pour extraire le pieu du sol en le tirant. Dans tous les cas, le dispositif de manutention doit exercer une force donnée sur le pieu et superposer à cette force une force alternative ayant une fréquence de quelques dizaines de Hertz. Cette force alternative supplémentaire est destinée à engendrer des vibrations qui facilitent l'enfoncement ou l'extraction du pieu.

La force principale appliquée sur le pieu pour l'enfoncer ou l'extraire est relativement importante (généralement de l'ordre de quelques dizaines de tonnes) alors que la force alternative est plus faible (généralement de l'ordre de plusieurs tonnes). Cette force alternative est généralement créée par un dispositif générateur de vibrations, interposé entre le support mobile et la charge, qui comporte des masses excentrées en mouvement pour engendrer un balourd.

Dans le cas de l'extraction des pieux, la force de traction est exercée par une grue qui est capable de tirer sur le pieu avec une force de plusieurs dizaines de tonnes. Cependant, cette grue est généralement incapable de supporter les vibrations qui, elles, sont indispensables pour réaliser l'enfoncement ou l'extraction du pieu.

Pour résoudre ce problème, on utilise actuellement des moyens d'amortissement de ces vibrations, généralement constitués de ressorts qui peuvent être en métal, en caoutchouc, en matière synthétique du type polyuréthanne, etc. Ces moyens ont notamment pour inconvénient d'exercer une force de rappel qui est proportionnelle au déplacement, donc non constante, ce qui rend imparfait le filtrage des vibrations.

On connaît par ailleurs, d'après le brevet US 4,813,498, un contre-balancier actif destiné à une tête d'injection pour le forage de puits, qui utilise un moteur hydraulique.

En outre; le document WO 99 58810 divulgue un appareil destiné à faciliter la connexion ou la déconnexion d'une tige de forage à un train de tiges, lequel comprend un dispositif de compensation de poids qui est de type hydraulique ou pneumatique.

L'invention a notamment pour but de surmonter les inconvénients précités.

Elle vise en particulier à procurer un dispositif de déplacement d'une charge du type précité qui est susceptible de permettre des mouvements de faible amplitude de la charge, parallèlement à la direction de la force, et cela sans nécessiter d'efforts importants et sans provoquer de réactions importantes sur le support mobile.

L'invention vise notamment à procurer un tel dispositif qui peut être utilisé avec un appareil de manutention du type grue pour la mise en position de pieux, en particulier de palplanches.

Elle vise aussi à réaliser un tel dispositif de manutention qui peut être utilisé pour l'enfoncement ou l'extraction de pieux par l'intermédiaire de moyens de vibration, tout en filtrant ces vibrations.

L'invention propose à cet effet un dispositif de déplacement d'une charge, du type défini en introduction, lequel comprend des moyens d'équilibrage mécaniques interposés entre le support mobile et la charge de manière à compenser le poids de la charge et autoriser des mouvements de faible amplitude de la charge dans une direction parallèle à la charge.

Ces moyens d'équilibrage comprennent un équilibreur propre à procurer un couple mécanique sinusoïdal ayant deux axes de sortie qui sont parallèles et ont des vitesses de rotation synchronisées mais de sens opposés, et dans lequel ces deux axes de sortie sont disposés dans un même plan horizontal et sont liés en rotation avec deux bras propres à supporter la charge par l'intermédiaire de moyens de liaison.

Par l'expression "moyens d'équilibrage mécanique", on entend désigner des moyens d'équilibrage, de type autonome, qui génèrent leur propre loi intrinsèque et qui ne comportent aucun fluide. De tels moyens mécaniques se différencient donc clairement des moyens décrits dans les documents précités, qui font appel à un fluide et présentent tous les inconvénients inhérents à l'utilisation d'un fluide.

Il est à noter en outre que les moyens d'équilibrage mécanique de l'invention ne nécessitent pas de moyens de guidage, puisque le guidage est fictif.

De tels moyens d'équilibrage autorisent aussi bien un positionnement fin de la charge, dans le cas de la mise en position de pieux du type palplanches, qu'un filtrage des vibrations dans le cas de l'enfoncement ou de l'extraction de pieux du sol.

Ainsi, le support mobile peut être un appareil de manutention apte à déplacer la charge dans la direction verticale en sorte que les moyens d'équilibrage autorisent un déplacement fin de la charge dans la direction verticale.

Le support mobile peut aussi être un appareil de manutention apte à déplacer la charge dans la direction verticale et comprenant des moyens générateurs de vibrations qui supportent la charge,et dans lequel les moyens d'équilibrage sont interposés entre le support mobile et les moyens générateurs de vibrations pour soustraire du support mobile les vibrations engendrées par les moyens générateurs de vibrations.

Un tel équilibreur peut notamment être du type décrit dans le brevet français n° 88 02 423, publié sous le n° 2 627 718.

Cet équilibreur, qui est purement mécanique, est utilisé généralement pour équilibrer les forces agissant sur un bras sollicité par une charge, tel qu'un outil. Il permet d'obtenir un équilibrage rigoureux du bras, quelle que soit sa position angulaire par rapport au corps sur lequel il est articulé. Normalement, ce bras peut pivoter de 360° par rapport au corps, ce qui permet à la charge de décrire une trajectoire circulaire.

Dans un équilibreur connu de ce type, l'opérateur peut déplacer la charge, telle qu'un outil, pratiquement sans effort puisque l'équilibreur compense les forces qui agissent sur le bras, et cela quelle que soit la position angulaire de ce dernier autour de son axe d'articulation en rotation, lequel est généralement horizontal.

Selon l'invention, cet équilibreur comprend deux bras synchronisés, tournant en sens opposé, et servant à supporter la charge.

L'équilibreur permet soit un positionnement fin d'une charge, soit un filtrage de vibrations lorsque cette charge est supportée par l'intermédiaire de moyens générateur de vibrations.

Avantageusement, les deux bras sont symétriques par rapport à un plan vertical.

Selon une autre caractéristique de l'invention, des butées sont prévues pour limiter la course angulaire des deux bras entre une position haute et une position basse, de part et d'autre d'une position horizontale, et des moyens de verrouillage sont prévus pour verrouiller les bras dans la position haute.

Dans une forme de réalisation, chacun des bras comporte plusieurs points d'ancrage aptes à supporter un moyen de liaison, et ces points d'ancrage sont situés à des distances différentes par rapport à l'axe de sortie, de manière à contrôler des charges de valeurs différentes avec une même valeur de réglage de couple.

En variante, chacun des bras comporte un point d'ancrage apte à supporter un moyen de liaison et des moyens de réglage propres à faire varier la distance du point d'ancrage par rapport à l'axe de sortie, de manière à contrôler des charges de valeurs différentes avec une même valeur de réglage de couple.

Selon encore une autre caractéristique de l'invention, le dispositif comprend des moyens de contrôle aptes à contrôler l'amplitude de vibration des bras.

Il est avantageux aussi de prévoir des moyens de régulation propres à contrôler d'éventuelles dérives pouvant résulter d'une différence, manifeste, entre la force moyenne et le réglage des moyens d'équilibrage.

A titre d'exemple, ces moyens de régulation comprennent soit l'ajout d'une valeur de l'effort porteur, soit l'ajustement du nombre de ressorts que comprennent les moyens d'équilibrage.

Il peut également être prévu une masse additionnelle propre à être appliquée sur le bâti des moyens d'équilibrage afin d'améliorer le filtrage des vibrations.

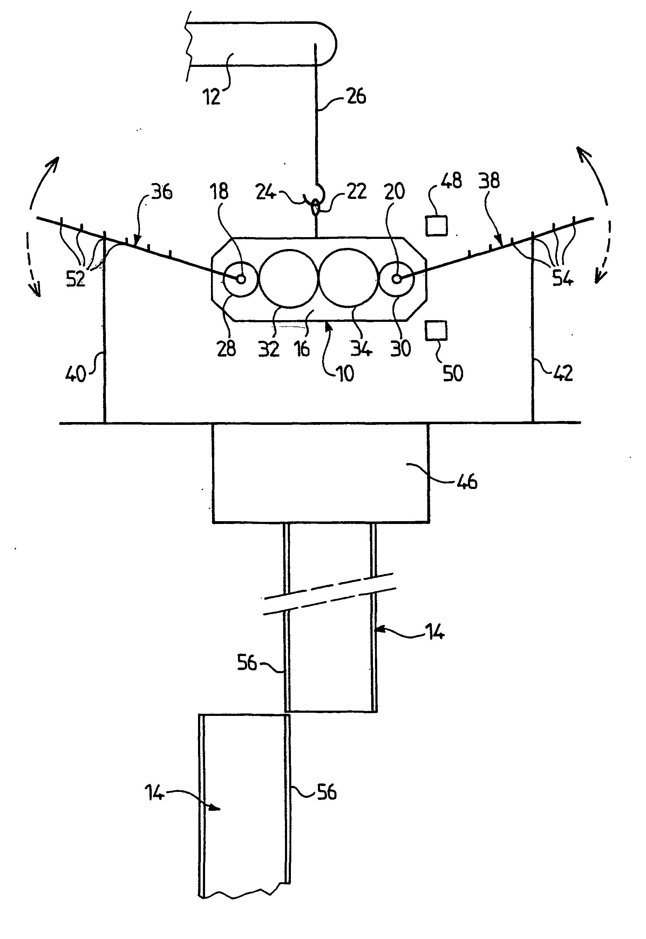

Dans la description qui suit, faite seulement à titre d'exemple, on se réfère aux dessins annexés, sur lesquels la figure unique est un schéma d'un dispositif de déplacement d'une charge selon l'invention.

Le dispositif représenté sur la figure du dessin comprend un équilibreur 10 interposé entre un support mobile 12 (représentée schématiquement) et un pieu 14, dans l'exemple du type palplanche, propre à être enfoncé dans le sol. Le support mobile est ici un dispositif de manutention du type grue ou analogue propre à déplacer une charge, ici un pieu, dans une direction verticale, soit ascendante soit descendante.

L'équilibreur 10 est ici réalisé conformément aux enseignements du brevet français n° 88 02 423 déjà cité. Il comprend un bâti 16 logeant un mécanisme interne propre à procurer un couple mécanique sinusoïdal et ayant deux axes ou arbres de sortie 18 et 20 qui sont parallèles entre eux et dans un même plan horizontal.

Le bâti 16 est ici muni d'un anneau 22 susceptible de coopérer avec un crochet 24 placé à l'extrémité d'un câble de levage 26 de la grue. L'équilibreur 10 est ainsi suspendu à la grue et disposé de manière que ses deux axes de sortie 18 et 20 soient dans un même plan sensiblement horizontal.

Les axes de sortie 18 et 20 sont solidaires de deux pignons dentés 28 et 30 qui engrènent respectivement avec deux autres pignons dentés 32 et 34 qui engrènent entre eux et sont solidaires d'un mécanisme interne doté de ressorts. Il en résulte que les axes de sortie 18 et 20 ont des vitesses de rotation synchronisées mais de sens opposés.

Ces deux axes de sortie 18 et 20 sont liés en rotation avec deux bras 36 et 38 propres à supporter la charge (ici le pieu 14) par l'intermédiaire de moyens de liaison, ici deux élingues 40 et 42. Ces élingues sont reliées à des moyens de fixation 46, tels que des griffes, qui servent à accrocher le pieu 14.

Comme on peut le voir, les deux bras 36 et 38 sont symétriques par rapport à un plan vertical et au moins deux butées 48 et 50 sont prévues pour limiter la course angulaire des deux bras entre une position haute et une position basse (non représentées) de part et d'autre d'une position horizontale.

Des moyens de verrouillage (non représentés) sont prévus pour verrouiller les bras 36 et 38 dans la position haute. Ces moyens peuvent être de toute nature, en particulier mécanique. Ils peuvent être actionnés directement sur l'équilibreur, ou bien à distance.

Chacun des bras 36 et 38 comporte plusieurs points d'ancrage 52, respectivement 54, aptes à supporter l'élingue correspondante 40, respectivement 42. Ces points d'ancrage sont situés à des distances différentes par rapport à l'axe de sortie, ce qui permet de contrôler des charges de valeurs différentes avec une même valeur de réglage de couple.

En variante, on peut prévoir que chacun des bras comporte un point d'ancrage associé à des moyens de réglage pour faire varier la distance du point d'ancrage par rapport à l'axe de sortie correspondant.

L'équilibreur 10 permet un déplacement manuel de la charge par un opérateur, aussi bien dans le sens ascendant que dans le sens descendant, sans intervention de la grue et sur une faible course définie de manière adéquate en fonction de l'assemblage à réaliser. Le système de suspension (ici le câble 26 de la grue) assure un déplacement horizontal qui permet le montage.

Pendant la manutention de la grue, les deux bras 36 et 38 synchronisés par l'équilibreur, sont verrouillés dans la position haute de la course. A titre d'exemple, cette course peut être de l'ordre de 30° de part et d'autre de l'horizontale en étant comprise entre une position haute et une position basse. Cette dernière correspond approximativement à la position finale souhaitée.

Le fonctionnement typique de cet ensemble s'effectue en trois phases.

Pendant une première phase, la grue déplace la charge 14, ici une palplanche, jusqu'à venir à proximité de la position où cette palplanche doit être liée à une palplanche précédente (non représentée). Pendant cette première phase les deux bras de l'équilibreur sont de préférence verrouillés en position haute. Pendant une deuxième phase, l'opérateur déverrouille les bras de l'équilibreur et déplace manuellement la palplanche de manière à mettre l'encoche 56 qu'elle comporte dans l'encoche 56 d'une palplanche précédente. Pendant une troisième phase, la grue descend la palplanche jusqu'à ce que celle-ci soit soutenue par le sol, son encoche coulissant le long de l'encoche de la palplanche précédente. La palplanche étant maintenant soutenue par le sol, la grue descend encore de quelques centimètres, ce qui fait que les bras de l'équilibreur viennent en butée dans la position haute et les élingues 40 et 42 se détendent. L'opérateur verrouille alors les bras en position haute et détache les élingues.

La grue est prête pour une autre manoeuvre. Il est à noter que la phase qui consiste à enfoncer la palplanche dans le sol n'est pas concernée par cette application de l'invention.

Les points d'ancrage ou amarrage des élingues sur chacun des bras permettent d'adapter plusieurs valeurs de poids de la palplanche pour un réglage de valeur unique du couple de l'équilibreur. En variante, on peut faire appel à un moyen de réglage continu, par exemple à vis sans fin, manuel ou motorisé, commandé ou automatique, pour déplacer les points d'ancrage de la charge sur les bras et permettre d'adapter le dispositif à plusieurs valeurs de poids.

Dans le montage précédemment décrit, les élingues 40 et 42 ne restent pas parfaitement verticales lors du fonctionnement. Si nécessaire, un système de stabilisation peut être utilisé pour les stabiliser dans l'espace.

Dans une variante de réalisation (non représentée), l'équilibreur 10 pourrait être supporté au lieu d'être suspendu.

Il est à noter que les bras peuvent être prolongés chacun au delà de l'axe de sortie correspondant et que des câbles ou analogues peuvent être reliés aux extrémités de chaque bras pour faciliter son pivotement par un opérateur.

Le dispositif représenté sur la figure est utilisable dans tous les cas où une approche finale fine et souvent manuelle est intéressante pour réaliser un positionnement fin, que cette approche finale soit ascendante ou descendante.

En dehors de la mise en place de pieux ou analogues, en particulier de palplanches, on peut citer d'autres applications. A titre d'exemple non limitatif, on peut mentionner la pose de rails de chemin de fer, la pose d'un moteur dans un véhicule, la pose de machine sur un socle, l'accrochage de charges externes sur des avions, et en général la manipulation de charges lourdes.

Dans une autre forme de réalisation, le support mobile 12 est un appareil de manutention apte à déplacer la charge dans la direction verticale et comprenant des moyens générateurs de vibrations 46 qui supportent la charge 14. Les moyens d'équilibrage 10 sont interposés entre le support mobile et les moyens générateurs de vibrations pour soustraire du support mobile les vibrations engendrées par les moyens générateurs de vibrations.

Ainsi, par rapport à la forme de réalisation précédente, la différence principale réside dans le fait que la charge 14, ici un pieu, est supportée par l'intermédiaire des moyens 46 propre à engendrer des vibrations.

Ces moyens générateurs de vibrations servant à enfoncer ou à extraire des pieux dans le sol.

L'appareil de manutention permet d'exercer une force donnée dans la direction verticale pour pousser ou extraire le pieu et de superposer à cette force une force alternative, ayant généralement une fréquence de quelques dizaines de Hertz, qui est produite par les moyens générateurs de vibrations.

Ici, les moyens 46 sont un système de poids vibrant suivant des fréquences comprises entre quelques dixièmes de Hertz et quelques centaines de Hertz, et l'équilibreur 10 est taré de manière différente par rapport la forme de réalisation précédente. L'équilibreur 10, les bras 36 et 38 et les points d'ancrage 52 et 54 sont ajustés de manière à exercer la force désirée.

Lorsque les moyens générateurs de vibrations 46 vibrent, les bras 36 et 38 oscillent et l'équilibreur 10 filtre les vibrations, si bien que l'équilibreur ne transmet au support mobile 12 que la force principale "nettoyée" des vibrations. Seules ne sont pas filtrées les hautes fréquences, supérieures à la bande passante de l'équilibreur 10, qui ne gênent pas la grue. Ce filtrage est effectif pour des fréquences de vibration fixes, variables ou ajustables, en fonction de la nature du sol.

Autrement dit, alors que dans la forme de réalisation précédente l'équilibreur 10 était utilisé pour former un mouvement fin, celui-ci est utilisé ici pour assurer un découplage entre les vibrations et la force porteuse.

Avantageusement, la force principale pourra être ajustée soit en déplaçant les points d'ancrage sur les bras, soit en déplaçant une masselotte le long des bras, soit en jouant sur le nombre de ressorts internes de l'équilibreur 10.

Les butées 48 et 50 pourront être remplacées par des moyens fournissant un effort proportionnel à l'enfoncement, du type ressort, éventuellement placés à une distance plus importante des axes 18 et 20 de manière à être plus progressifs.

Egalement, un système de détection pourra être intégré pour détecter les points de débattement maxima des bras de l'équilibreur et actionner un dispositif permettant d'inverser une dérive de la position moyenne des bras. Cette action pourra être, non limitativement, une modification de la force exercée par le support, ou la mise en service ou hors service d'une partie des ressorts de l'équilibreur.

Enfin une sécurité pourra être ajoutée afin d'éviter que des vibrations, en l'absence de pieu, n'engendrent des amplitudes dommageables à l'ensemble de la mécanique.

Dans certains cas, il pourra être ajouté au bâti de l'équilibreur une masse additionnelle afin de faire un barrage supplémentaire aux vibrations.

Dans cette application aux générateurs de vibrations du type vibrofonceur, le dispositif de l'invention permet de filtrer les vibrations ainsi que certaines de leurs harmoniques sur toute l'amplitude de ces vibrations. Ce filtrage est effectif car l'équilibreur générant un couple sinusoïdal, l'effort sur le support est constant quelle que soit la position du bras, dans la mesure où la bande passante de l'équilibreur est compatible avec la fréquence des vibrations.

Bien entendu, cette application n'est pas limitée aux générateurs de vibrations, et elle peut aussi servir à filtrer des vibrations indésirables, par exemple celles d'un moteur sur un socle fragile ou nécessitant une immobilisé absolue.

## Revendications

1. Dispositif de déplacement d'une charge, du type comprenant un support mobile propre à supporter la charge et à exercer sur cette charge une force dans une direction donnée,
**caractérisé en ce qu'**il comprend des moyens d'équilibrage mécanique (10) interposés entre le support mobile (12) et la charge (14) de manière à compenser le poids de la charge et autoriser des mouvements de faible amplitude de la charge dans une direction parallèle à la charge, **en ce que** ces moyens d'équilibrage comprennent un équilibreur (10) propre à procurer un couple mécanique sinusoïdal et ayant deux axes de sortie (18, 20) qui sont parallèles et ont des vitesses de rotation synchronisées mais de sens opposés, et **en ce que** ces deux axes de sortie (18, 20) sont disposés dans un même plan horizontal et sont liés en rotation avec deux bras (36, 38) propres à supporter la charge par l'intermédiaire de moyens de liaison (40, 42).

2. Dispositif selon la revendication 1, **caractérisé en ce que** le support mobile (12) est un appareil de manutention apte à déplacer la charge dans la direction verticale en sorte que les moyens d'équilibrage (10) autorisent un déplacement fin de la charge (14) dans la direction verticale.

3. Dispositif selon la revendication 1, **caractérisé en ce que** le support mobile (12) est un appareil de manutention apte à déplacer la charge dans la direction verticale et comprenant des moyens générateurs de vibrations (46) qui supportent la charge (14), et **en ce que** les moyens d'équilibrage (10) sont interposés entre le support mobile et les moyens générateurs de vibrations pour soustraire du support mobile les vibrations engendrées par les moyens générateurs de vibrations.

4. Dispositif selon l'une des revendications 1 à 3, **caractérisé en ce que** les deux bras (36, 38) sont symétriques par rapport à un plan vertical.

5. Dispositif selon l'une des revendications 1 à 4,
**caractérisé en ce que** des butées (48, 50) sont prévues pour limiter la course angulaire des deux bras (36, 38) entre une position haute et une position basse, de part et d'autre d'une position horizontale, et **en ce que** des moyens de verrouillage sont prévus pour verrouiller les bras dans la position haute.

6. Dispositif selon l'une des revendications 1 à 5, **caractérisé en ce que** chacun des bras (36, 38) comporte plusieurs points d'ancrage (52, 54) aptes à supporter un moyen de liaison (40, 42) et **en ce que** ces points d'ancrage sont situés à des distances différentes par rapport à l'axe de sortie (18, 20), de manière à contrôler des charges de valeurs différentes avec une même valeur de réglage de couple.

7. Dispositif selon l'une des revendications 1 à 5, **caractérisé en ce que** chacun des bras (36, 38) comporte un point d'ancrage (52, 54) apte à supporter un moyen de liaison (40, 42) et des moyens de réglage propres à faire varier la distance du point d'ancrage par rapport à l'axe de sortie (18, 20), de manière à contrôler des charges de valeurs différentes avec une même valeur de réglage de couple.

8. Dispositif selon l'une des revendications 3 à 7, **caractérisé en ce qu'**il comprend des moyens de contrôle aptes à contrôler l'amplitude de vibrations des bras (36, 38).

9. Dispositif selon l'une des revendications 1 à 8, **caractérisé en ce qu'**il comprend des moyens de régulation propres à contrôler d'éventuelles dérives pouvant résulter d'une différence, même faible, entre la force moyenne et le réglage des moyens d'équilibrage (10).

10. Dispositif selon la revendication 9, **caractérisé en ce que** ces moyens de régulation comprennent soit l'ajout d'un valeur de l'effort porteur, soit l'ajustement du nombre de ressorts que comprennent les moyens d'équilibrage.

11. Dispositif selon l'une des revendications 3 à 10, **caractérisé en ce qu'**il comprend une masse additionnelle propre à être appliquée sur le bâti que comportent les moyens d'équilibrage afin d'améliorer le filtrage des vibrations.

## Claims

1. Device for displacing a load comprising a mobile support adapted to support the load and exert a force in a given direction on this load, **characterised in that** it comprises mechanical balancing means (10) interposed between the mobile support (12) and the load (14) so as to compensate the weight of the load and allow movements of slight amplitude of the load in a direction parallel to the load, **in that** these balancing means comprise a balancer (10) capable of providing a sinusoidal mechanical torque and having two output shafts (18, 20) which are parallel and have speeds of rotation which are synchronised but in opposite directions, and **in that** these two output shafts (18, 20) are disposed in the same horizontal plane and are rotationally engaged with two arms (36, 38) capable of supporting the load via connecting means (40, 42).

2. Device according to claim 1, **characterised in that** the mobile support (12) is a handling machine capable of displacing the load in the vertical direction so that the balancing means (10) allow precise displacement of the load (14) in the vertical direction.

3. Device according to claim 1, **characterised in that** the mobile support (12) is a handling machine capable of displacing the load in the vertical direction and comprising vibration-generating means (46) which support the load (14) and **in that** the balancing means (10) are interposed between the mobile support and the vibration generating means so as to isolate the mobile support from the vibrations generated by the vibration generating means.

4. Device according to any of claims 1 to 3, **characterised in that** the two arms (36, 38) are symmetrical about a vertical plane.

5. Device according to any of claims 1 to 3, **characterised in that** stops (48, 50) are provided to limit the angular travel of the two arms (36, 38) between a high position and a low position on either side of a horizontal position, and **in that** locking means are provided to lock the arms in the high position.

6. Device according to any of claims 1 to 5, **characterised in that** each of the arms (36, 38) comprises a plurality of fixing points (52, 54) capable of supporting a connecting means (40, 42) and **in that** these fixing points are located at different distances from the output shaft (18, 20) so as to control loads of different values with the same torque adjusting value.

7. Device according to any of claims 1 to 5, **characterised in that** each of the arms (36, 38) comprises a fixing point (52, 54) capable of supporting a connecting means (40, 42) and adjusting means capable of varying the distance between the fixing point and the output shaft (18, 20) so as to control loads of different values with the same torque adjusting value.

8. Device according to any of claims 3 to 7, **characterised in that** it comprises control means capable of controlling the amplitude of the vibrations of the arms (36, 38).

9. Device according to any of claims 1 to 8, **characterised in that** it comprises regulating means capable of controlling possible drifts which may result from a difference, even a slight difference, between the mean force and the adjustment of the balancing means (10).

10. Device according to claim 9, **characterised in that** these regulating means comprise either the addition of a value of the carrying force or the adjustment of the number of springs provided in the balancing means.

11. Device according to any of claims 3 to 10, **characterised in that** it comprises an additional mass capable of being applied to the frame of the balancing means in order to improve filtering of the vibrations.

## Patentansprüche

1. Vorrichtung zum Versetzen einer Last, vom Typ mit einem beweglichen Träger, der geeignet ist, die Last zu tragen und auf diese Last eine Kraft in eine vorgegebene Richtung auszuüben,
**dadurch gekennzeichnet, dass** er mechanische Ausgleichseinrichtungen (10) aufweist, die zwischen dem beweglichen Träger (12) und der Last (14) gesetzt sind, derart, dass das Gewicht der Last kompensiert wird und Bewegungen geringer Amplitude der Last in eine Richtung parallel zur Last ermöglicht werden, dass diese Ausgleichseinrichtungen eine Ausgleichseinheit (10) aufweisen, die geeignet ist, ein mechanisches sinusförmiges Moment zu übertragen und zwei Ausgangsachsen (18, 20) aufweist, die parallel verlaufen und synchronisierte jedoch in Gegenrichtung verlaufende Drehgeschwindigkeiten haben, und dass diese beiden Ausgangsachsen (18, 20) in einer gleichen horizontalen Ebene angeordnet und drehverbunden sind mit zwei Armen (36, 38), die in der Lage sind, die Last mittels Verbindungseinrichtungen (40, 42) zu tragen.

2. Vorrichtung nach Anspruch 1, **dadurch gekennzeichnet, dass** der bewegliche Träger (12) ein Handhabungsgerät ist, das in der Lage ist, die Last in die vertikale Richtung zu verschieben, derart, dass die Ausgleichseinrichtungen (10) eine leichte Bewegung der Last (14) in die vertikale Richtung erlauben.

3. Vorrichtung nach Anspruch 1, **dadurch gekennzeichnet, dass** der bewegliche Träger (12) ein Handhabungsgerät ist, das in der Lage ist, die Last in die vertikale Richtung zu bewegen und Schwingungserzeugungseinrichtungen (46) aufweist, die die Last (14) tragen, und dass die Ausgleichseinrichtungen (10) zwischen dem beweglichen Träger und den Schwingungserzeugungseinrichtungen angeordnet sind, um dem beweglichen Träger die Schwingungen zu entziehen, die von den Schwingungserzeugungseinrichtungen erzeugt wurden.

4. Vorrichtung nach einem der Ansprüche 1 bis 3, **dadurch gekennzeichnet, dass** die beiden Arme (36, 38) bezüglich einer vertikalen Ebene symmetrisch angeordnet sind.

5. Vorrichtung nach einem der Ansprüche 1 bis 4, **dadurch gekennzeichnet, dass** Anschläge (48, 50) vorgesehen sind, um den Winkelweg der beiden Arme (36, 38) zwischen einer oberen Position und einer unteren Position, beiderseits einer horizontalen Position zu begrenzen, und dass Verriegelungseinrichtungen vorgesehen sind, um die Arme in der oberen Position zu verriegeln.

6. Vorrichtung nach einem der Ansprüche 1 bis 5, **dadurch gekennzeichnet, dass** ein jeder der Arme (36, 38) mehrere Verankerungspunkte (52, 54) aufweist, die in der Lage sind, eine Verbindungseinrichtung (40, 42) zu tragen, und dass diese Verankerungspunkte an unterschiedlichen Abständen bezüglich der Ausgangsachse (18, 20) angeordnet sind, derart, dass sie Lasten unterschiedlicher Größe mit einem gleichen Momenteinstellwert kontrollieren.

7. Vorrichtung nach einem der Ansprüche 1 bis 5, **dadurch gekennzeichnet, dass** ein jeder der Arme (36, 38) einen Verankerungspunkt (52, 54) aufweist, der in der Lage ist, eine Verbindungseinrichtung (40, 42) zu tragen und Einstelleinrichtungen aufweist, die in der Lage sind, den Abstand des Verankerungspunkts bezüglich der Ausgangsachse (18, 20) zu verändern, derart, dass Lasten unterschiedlicher Werte mit einem gleichen Momenteinstellwert kontrolliert werden.

8. Vorrichtung nach einem der Ansprüche 3 bis 7, **dadurch gekennzeichnet, dass** sie Einstelleinrichtungen aufweist, die in der Lage sind, die Schwingungsamplitude der Arme (36, 38) zu steuern.

9. Vorrichtung nach einem der Ansprüche 1 bis 8, **dadurch gekennzeichnet, dass** sie Einstelleinrichtungen aufweist, die in der Lage sind, mögliche Abweichungen zu steuern, die aus einer wenn auch geringen Differenz zwischen der mittleren Kraft und der Einstellung der Ausgleichseinrichtungen (10) herrühren könnten.

10. Vorrichtung nach Anspruch 9, **dadurch gekennzeichnet, dass** die Einstelleinrichtungen entweder das Hinzufügen eines Tragekraftwertes oder die Einstellung der Anzahl der Federn aufweisen, die die Ausgleichseinrichtungen aufweisen.

11. Vorrichtung nach einem der Ansprüche 3 bis 10, **dadurch gekennzeichnet, dass** sie eine Zusatzmasse aufweist, die geeignet ist, auf das Gestell aufgebracht zu werden, das die Ausgleichseinrichtungen aufweisen, um das Filtern der Schwingungen zu verbessern.
